# EUROPÄISCHE PATENTSCHRIFT

(11) **EP 0 366 667 B1**
(45) Veröffentlichungstag und Bekanntmachung des Hinweises auf die Patenterteilung: **14.04.1993**
(21) Anmeldenummer: 88904493.9
(22) Anmeldetag: 03.06.1988
(51) Int. Cl.: B29C 45/00

(54) **VERFAHREN ZUR HERSTELLUNG VON AUS KÜKEN UND GEHÄUSE BESTEHENDEM HÄHNCHEN FÜR MEDIZINISCHE GERÄTE**
PROCESS FOR MANUFACTURING A COCK CONSISTING OF A PLUG AND A HOUSING FOR MEDICAL EQUIPMENT
PROCEDE DE FABRICATION DE ROBINETS COMPOSES D'UN BOITIER ET D'UN BOISSEAU POUR APPAREILS MEDICAUX

(30) Priorität: 05.06.1987 DE 3718815
(43) Veröffentlichungstag der Anmeldung: 09.05.1990
(73) Patentinhaber: pvb medizintechnik gmbh, 85610 Kirchseeon (DE)
(72) Erfinder: THURAU, Bernd, D-7244 Waldachtal 2 (DE)
(74) Vertreter: KOHLER SCHMID + PARTNER
(86) Internationale Anmeldenummer: DE8800327
(87) Internationale Veröffentlichungsnummer: WO8809713

(56) Entgegenhaltungen:
- EP-A- 0 147 571
- DE-A- 2 355 273
- DE-A- 3 413 721
- FR-A- 2 316 060
- US-A- 4 003 403

## Beschreibung

Die Erfindung bezieht sich auf ein Verfahren zur Herstellung von ein Hahnküken und ein Hahngehäuse bestehendem Hähnchen aus Kunststoff, das in Verbindung mit medizinischen Geräten verwendet wird, z.B. in Verbindung mit Infusionsgeräten.

Bekannte Hähnchen für diesen Zweck werden aus Kunststoff hergestellt, wobei aber das Gehäuse und das Küken in getrennten Formen gespritzt werden. Diese Teile werden nach Schmierung der aufeinandergleitenden Flachen mit Silikonöl zusammengesetzt. Die beiden Teile müssen daher so ausgebildet sein, daß sie dieses Zusammenmontieren auf möglichst einfache Weise erlauben. Die Hinterschneidungen, die das Küken nach seinem Einschieben in das Gehäuse festhalten, können daher das Küken nicht allzusehr hintergreifen, weil sonst das Finschieben des Kükens in das Gehäuse zu stark behindert werden würde. Je kleiner aber derartige Hinterscheidungen sind, desto eher tritt das Problem auf, daß die Hähnchen nicht dicht genug sind, oder aber, wenn das Hähnchen in eine Leitung eingeschaltet ist, in der eine Flüssigkeit oder ein Gas mit verhältnismäßig hohem Druck geführt wird, das Hahnküken aus dem Gehäuse herausgestoßen wird. Solche Unfälle können jedoch für den Patienten lebensgefährlich sein.

Mit der EP-A-0147 571 ist ein Verfahren bekannt bei dem ein Spritzgußteil aus mehreren Einzelteilen besteht. Das Spritzgußteil wird bei diesem Verfahren dadurch hergestellt, daß in einer ersten Spritzform ein erstes Teil gespritzt wird, dieses Teil der Spritzgußform entnommen und in eine zweite Spritzgußform eingelegt und dort ein zweites Teil an das erste Teil angespritzt wird. Entsprechend der Anzahl der Teile wird dieses Verfahren fortgesetzt und dabei der Spritzling der Spritzgußform jeweils entnommen und in die nächste Spritzgußform eingelegt. Dieses Verfahren hat bei den hier in Frage kommenden medizinischen Geräten den gravierenden Nachteil, daß beim Wechsel der Spritzgußform der Gefahr einer Kontamination ausgesetzt ist. Da jedoch medizinische Geräte und demnach auch deren Teile strengen Hygienebestimmungen unterworfen sind ist dieses Verfahren für die Herstellung dieser Geräte nicht anwendbar.

Mit der FR-A-2 316 060 ist ein Verfahren bekannt, bei dem ein aus zwei Teilen bestehender Gegenstand in einer Spritzgußform dadurch hergestellt wird, daß zuerst der eine Teil und anschließend der andere Teil gespritzt wird. Dieses Verfahren ist jedoch darauf ausgerichtet, daß die Verbindung der beiden Teile ein genügend großes Spiel aufweist, so daß das eine Teil gegenüber dem anderen leicht beweglich ist. Bei einem in einem Gehäuse eines Hähnchens angeordneten Küken wird jedoch in erster Linie gefordert, daß das Küken in dem Gehäuse derart angeordnet ist, daß das im Hähnchen strömende Medium nicht austreten kann und dennoch eine leichte Drehbarkeit des Kükens sichergestellt ist.

Der Erfindung liegt also die Aufgabe zugrunde, die Betriebssicherheit dieser Hähnchen zu erhöhen.

Diese Aufgabe wird gemäß der Erfindung durch die im Patentanspruch angegebenen Merkmale gelöst. Dadurch daß Hähnchen und Gehäuse nicht mehr nach der Fertigstellung zusammengebaut werden, sondern eines der beiden Teile zuerst gespritzt wird und dann das andere Teil in oder um das zuvor gespritzte Teil gespritzt wird, wobei dieses Verfahren ineiner einzigen Spritzform durchgeführt wird, zunächst also das eine Teil gespritzt und dann ohne Herausnehmen dieses Teiles aus dieser Form das zweite Teil in dieser Form in oder um das zuerst hergestellte Teil gespritzt wird, ist es möglich, die Grenzfläche zwischen den beiden Teilen so zu gestalten, daß das Küken nicht, auch nicht bei hohen Drücken, aus dem Gehäuse entfernt werden kann und da, z.B. bei labyrinthmäßiger Ausbildung der Grenzfläche zwischen den beiden Teilen, das Hähnchen auch bei hohen Gas- oder Flüssigkeitsdrücken dicht ist. Schließlich entfällt auch das nachträgliche Zusammensetzen von Gehäuse und Küken, so daß die mit der Infusionsflüssigkeit in Berührung kommenden Flächen des Hähnchens keimfrei sind.

Zwar ist es bereits bekannt, in nur einer Spritzform ein Spielzeugtier in zwei Spritzvorgängen in nur einer Form unter Verwendung von zwei verschieden eingefärbten Kunststoffmassen herzustellen, beispielsweise ein Äffchen, dessen Körper aus braun eingefärbtem PVC und dessen Gesicht aus beige eingefärbtem PVC besteht, jedoch handelt es sich hierbei nicht um Teile, die relativ zueinander beweglich sein müssen und trotzdem an der Grenzfläche zwischen den beiden Kunststoffteilen hinreichend dicht sein müssen. Sie müssen auch nicht den anderen Anforderungen genügen, die bei medizinischen Geräten erfüllt sein müssen.

Erfindungsgemäß werden die beiden Teile aus verschiedenen Kunststoffen gespritzt. Dabei soll sich das zuerst gespritzte Teil nicht mehr erweichen, wenn das zweite Teil gespritzt wird. Die Werkstoffe sollen daher eine unterschiedliche Spritztemperatur aufweisen. Das Küken besteht aus Polyäthylen mit einem Schwindmaß zwischen 0,1 und 0,8 Prozent und das Gehäuse aus Polykarbonat dessen Schwindmaß im gleichen Bereich liegt, wobei ein Polyäthylen, das eine Spritztemperatur von 220°, und ein Polykarbonat verwendet wird, das eine Spritztemperatur von ca. 300° aufweist. Die Verwendung dieser beiden Werkstoffe hat den Vorteil, daß die Grenzflächen zwischen den beiden Teilen aufeinander gleiten können, das Küken sich also in dem Gehäuse leicht drehen läßt, wobei besonders vorteilhaft ist, daß, wie oben bereits erwähnt, die aufeinandergleitenden Flächen zwischen Küken und Gehäuse trotzdem dicht sind.

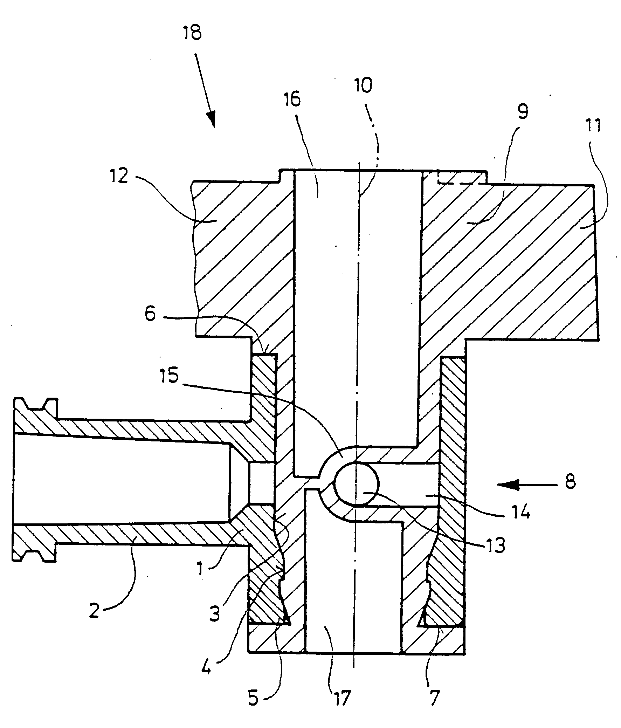

Zur Veranschaulichung des erfindungsgemäßen Verfahrens ist das mit dem Verfahren hergestellte Hähnchen in der Zeichnung in einem Schnitt dargestellt.

Das Hähnchengehäuse 1 weist einen Anschlußstutzen 2 auf und eine leicht konische, senkrecht zu dem Stutzen 2 verlaufende innere Aussparung 3, die nach innen ragende Vorsprünge 4 und 5 aufweist. Eine obere 6 und eine untere Stirnfläche 7 begrenzen das Hähnchengehäuse 1. Dieses Teil wird in einer Spritzform zuerst gespritzt, wobei ein Polycarbonat mit einer Spritztemperatur von ca. 300° verwendet wird, das im Handel als General Elektric Lexan^{R} 164 R erhältlich ist. Die Spritzform wird dabei auf einer Temparatur von ca. 75 - 120° gehalten. Die Spitzrichtung ist durch den Pfeil 8 gekennzeichnet.

Ein Hahnküken 9 weist quer zu seiner Achse 10 Handhaben 11 und 12 und eine zentrale durchgehende Bohrung 13 auf, in die eine rechtwinklig hierzu verlaufende Bohrung 14 mündet. Die Bohrungen 13 und 14 sind in einem massiven Zwischenstück 15 des Kükens vorgesehen, oberhalb dem ein Hohlraum 16 und unterhalb dem ein Hohlraum 17 vorgesehen ist. Nachdem das Gehäuse 1 gespritzt ist, wird durch eine andere Einspritzöffnung des Werkzeuges das Küken 9 gespritzt, die Spritzrichtung ist dem Pfeil 18 angegeben. Als der Werkstoff für das Küken 11 kann beispielsweise ein Polyäthylen mit einer Spritztemperatur von etwa 220° verwendet werden, das im Handel von BASF als Lupolen^{R} 60/31 M erhältlich ist. Dabei wird das Werkzeug auf einer Temperatur von ca. 30° Celsius gehalten. Wesentlich ist, daß die beiden Werkstoffe beim Spritzen des zweiten Teiles, im dargestellten Beispiel also des Kükens 9, keine Verbindung miteinander eingehen, da sonst die Gefahr besteht, daß sich das Küken 9 nicht im Gehäuse 1 drehen läßt.

Wie aus der Zeichnung ersichtlich ist, übergreift das Küken die beiden Stirnflächen 6 und 7 des Gehäuses 1 vollständig. Diese Ausbildung sorgt für eine ausreichende Abdichtung der aufeinandergleitenden Flächen. Auch der Verlauf der Grenzfläche im Bereich der Vorsprünge 4 und 5 des Gehäuses 1 verstärkt die Abdichtung der Grenzfläche zwischen dem Gehäuse 1 und dem Küken 9. Bei Bedarf können die Vorsprünge 4 und 5 auch als Ringschultern mit rechteckigem Querschnitt ausgebildet sein, oder aber auch fehlen, wenn die Dichtwirkung durch das Übergreifen der Stirnflächen 6 und 7 hinreichend gesichert ist. Die Werkstoffe für das Küken 9 und das Gehäuse 1 können unterschiedlich eingefärbt sein.

## Patentansprüche

1. Verfahren zur Herstellung eines sterilen Kunststoffhähnchens für medizinische Geräte, welches aus einem Küken (9) und einem Gehäuse (1) besteht,
gekennzeichnet durch folgende Schritte:
Spritzen eines Polykarbonats, das ein Schwindmaß zwischen 0,1 und 0,8 Prozent hat in eine einzelne Spritzform mit einer Spritztemperatur von etwa 300° C zur Bildung eines Gehäuses (1), welches einen Verbindungsstutzen (2) und eine senkrecht dazu verlaufende innere Aussparung (3) hat, die nach innen ragende Vorsprünge (4, 5) trägt, wobei das Gehäuse außerdem durch eine obere und untere Stirnfläche (6, 7) begrenzt ist und die Spritzform während des Spritzvorgangs des Polykarbonats auf einer Temperatur von circa 75 bis 120° C gehalten ist,
und anschließend
Spritzen eines Polyäthylens, welches ein Schwindmaß zwischen 0,1 und 0,8 Prozent hat, in die einzige Spritzform in und über das Gehäuse (1) bei einer Spritztemperatur von etwa 220° C zur Ausbildung des Kükens (9), so daß dieses in die konische innere Aussparung (3), die nach innen ragenden Vorsprünge (4, 5) paßt und die Stirnflächen (6, 7) in flüssigkeits- oder gasdichter Weise übergreift und anschließend eine Drehung des Kükens (9) im Gehäuse (1) möglich ist, wobei beim Spritzen des Polyäthylens die Spritzform auf einer Temperatur von circa 30° C gehalten ist.

## Claims

1. Process for the production of a sterile plastics material cock for medical appliances, which consists of a plug (9) and a housing (1), characterised by the following steps:
spraying a polycarbonate having a degree of shrinkage of between 0.1 and 0.8 % into an individual injection mould at a spraying temperature of approximately 300°C to form a housing (1), which has a connection piece (2) and an internal recess (3) which extends perpendicular thereto and has projections (4, 5) projecting inwardly, wherein the housing is furthermore delimited by an upper and lower end surface (6, 7), and the injection mould is maintained at a temperature of approximately 75 to 120°C during the polycarbonate spraying process,
and, subsequently,
spraying a polyethylene, which has a degree of shrinkage of between 0.1 and 0.8 %, into the individual injection mould into and over the housing (1) at a spraying temperature of approximately 220°C to form the plug (9), such that this plug fits into the conical inner recess (3) and the projections (4, 5) projecting inwards, and
engages over the end surfaces (6, 7) in a fluid or gastight manner and subsequently the plug (9) can be rotated in the housing (1), the injection mould being maintained at a temperature of approximately 30°C during the polyethylene spraying process.

## Revendications

1. Procédé de fabrication d'un robinet stérile en matière plastique pour appareils médicaux, qui est constitué d'un boisseau (9) et d'un boîtier (1),
caractérisé par les étapes suivantes :
injection d'un polycarbonate qui présente un retrait compris entre 0,1 et 0,8 pour cent dans un moule d'injection individuel, à une température d' injection de 300° C environ, pour former un boîtier (1) qui comporte une tubulure de liaison (2) et une découpe intérieure (3), s'étendant perpendiculairement à la tubulure, découpe qui comporte des saillies (4, 5) dirigées vers l'intérieur, le boîtier étant en outre délimité par une surface frontale supérieure (6) et une surface frontale inférieure (7) et le moule d'injection étant maintenu à une température comprise entre 75 et 120° C environ, pendant l'injection du polycarbonate,
et ensuite
injection d'un polyéthylène, qui présente un retrait compris entre 0,1 et 0,8 pour cent, dans le moule d'injection unique dans et sur le boîtier (1), à une température d'injection de 220° C environ, pour former le boisseau (9), de manière que celui-ci s'ajuste dans la découpe intérieure (3) conique qui comporte les saillies (4, 5), dirigées vers l'intérieur, et passe sur les surfaces frontales (6, 7), de manière étanche aux liquides ou aux gaz, et qu'ensuite une rotation du boisseau (9) dans le boîtier (1) soit possible, le moule d'injection étant maintenu à une température de 30° C environ, pendant l'injection du polyéthylène.
